# EUROPÄISCHE PATENTSCHRIFT

(11) **EP 0 627 975 B1**
(45) Veröffentlichungstag und Bekanntmachung des Hinweises auf die Patenterteilung: **05.02.1997**
(21) Anmeldenummer: 93905270.0
(22) Anmeldetag: 23.02.1993
(51) Int. Cl.: B25J 9/04, B25J 18/00, B25J 9/08, B25J 9/10

(54) **VORRICHTUNG ZUM MANIPULIEREN VON GEGENSTÄNDEN**
DEVICE FOR MANIPULATING OBJECTS
DISPOSITIF POUR MANIPULER DES OBJETS

(30) Priorität: 29.02.1992 DE 9202682 U; 14.01.1993 DE 9300391 U
(43) Veröffentlichungstag der Anmeldung: 14.12.1994
(73) Patentinhaber: Städele, Berta, W-88697 Bermatingen (DE)
(72) Erfinder: Städele, Erhard, verstorben (DE)
(74) Vertreter: Weiss, Peter, Dr. rer. nat.
(86) Internationale Anmeldenummer: EP9300418
(87) Internationale Veröffentlichungsnummer: WO9316848

(56) Entgegenhaltungen:
- EP-A- 0 084 249
- EP-A- 0 187 871
- EP-A- 0 299 551
- DE-A- 3 601 456
- FR-E- 86 178

## Beschreibung

Die Erfindung betrifft eine Vorrichtung zum Manipulieren von Gegenständen mit einem Greifer od.dgl., welcher über zumindest einen Arm mit einem Getriebe und Antriebsmotor verbunden ist, wobei zur Übertragung der Drehbewegung auf eine nachfolgende Welle in dem Arm zumindest eine Hohlwelle mit Zinnen in Aufnahmen in einem mit der Hohlwelle fluchtendem Kupplungsstück und das Kupplungsstück mit Einsätzen in Tälern zwischen den Zinnen eingreift, wobei dem Kupplungsstück anderenends eine Schrägverzahnung aufgesetzt ist,

Derartige Manipulatoren sind in vielfältiger Form und Ausführung bekannt. Sie dienen vor allem zum Manipulieren und Bedienen von Gegenständen, beispielsweise in Reinräumen oder in kerntechnischen Anlagen. Zweck der Manipulatoren ist, daß der Benutzer nicht in Berührung mit den zu handhabenden Gegenständen kommt.

Werden Gegenstände beispielsweise gegriffen und umgesetzt oder bedient, so ist der Greifer entsprechend ausgebildet.

Dabei soll der Begriff Greifer alle möglichen Handlinggeräte umfassen und im vorliegenden Fall nicht auf ein spezielles Anwendungsgebiet beschränkt sein.

Bekannte Manipulatoren arbeiten in der Regel mit einer Mehrzahl von Armteilen, die über Gelenke verbunden sind. Die Bewegung dieser Armteile erfolgt beispielsweise über Baudenzüge od.dgl.

Aus der DE-OS 37 34 179 ist jedoch auch eine Bewegungsübertragung bekannt, bei der eine Mehrzahl von Hohlwellen ineinander drehen und diese Hohlwellen jeweils randseitig mit einer Schrägverzahnung versehen sind, über die die entsprechende Bewegung auch über ein Gelenk hinweg übertragen werden kann. Eine derartige Übertragung mittels Hohlwellen und Schrägverzahnung hat erhebliche Vorteile gegenüber Baudenzügen, vor allem was den Antrieb und die Sicherheit der Übertragung der Bewegung anbelangt. Problematisch ist allerdings die Reparatur derartiger Manipulatoren, da beispielsweise bei einem Verschleiß der Schrägverzahnung die gesamte Hohlwelle ausgetauscht werden muß. Ferner ist auch das Einsetzen durch die Notwendigkeit einer Mehrzahl von Kugellager sehr erschwert.

Aus der EP-A 0 299 551 ist ferner ein Manipulatorarm gemäß Oberbegriff von Anspruch 1 bekannt, bei dem zwei Hohlwellen zinnenartig miteinander verbunden sind. In die entsprechenden Stirnränder der Hohlwellen sind Täler eingeformt, zwischen denen Zinnen stehen bleiben. In diese Täler greifen die Zinnen der anderen Hohlwelle ein.

Der vorliegenden Erfindung liegt die Aufgabe zugrunde, eine Vorrichtung der o.g. Art zu schaffen, bei welcher der Zusammenbau der einzelnen Teile, deren Lagerung und deren Austausch wesentlich vereinfacht ist.

Zur Lösung dieser Aufgabe führt, daß jede Zinne ein Schaftteil aufweist, wobei die zu den Tälern hin weisenden Seitenflächen von sich gegenüberliegenden Zinnen in jeweils einer gemeinsamen achsparallelen Ebene angeordnet sind, und daß jeder Einsatz zur Aufnahme hin Stützflächen aufweist, wobei die Stützflächen von sich gegenüberliegenden Einsätzen ebenfalls in einer achsparallelen Ebene liegen.

Damit wird die Hohlwelle von dem eigentlichen Kupplungsstück abgekoppelt, so daß bei einem Verschleiß dieses Kupplungsstückes bzw. einer darauf angeordneten Schrägverzahnung nicht die Hohlwelle mit ausgetauscht werden muß, sondern lediglich das Kupplungsstück aus dem Arm entnommen und repariert werden kann. Da sich auf diesem Kupplungsstück auch die entsprechenden Kugellager befinden, wird hierdurch ein eigenes Bauteil geschaffen, welches separat und ohne große Schwierigkeit in einen Arm eingesetzt werden kann. Danach ist es lediglich notwendig, daß die Hohlwelle ihre Ankupplung an dieses Kupplungsstück findet, was durch die Zinnen gewährleistet wird.

Auch fertigungstechnisch hat es sich als günstig erwiesen, wenn die Seitenflächen von sich gegenüberliegenden Zinnen in jeweils einer gemeinsamen achsparallelen Ebene angeordnet sind. Hierdurch können diese Seitenflächen in nur einem Arbeitsgang gemeinsam hergestellt werden.

In Gebrauchslage wirken die Seitenflächen mit den entsprechend ausgeformten Stützflächen an den Einsätzen zusammen. Da auch diese Stützflächen von sich gegenüberliegenden Einsätzen in einer achsparallelen Ebene liegen, wird bereits eine günstige Verbindung gewährleistet.

Ein wesentlicher Vorteil der vorliegenden Erfindung liegt jedoch darin, daß die Seitenflächen der Zinnen mit ballenartigen Materialanhäufungen belegt sind. Hierdurch wird nicht nur die Paßgenauigkeit von Kupplungsstück zur Hohlwelle erhöht, sondern die Balligkeit gewährleistet infolge ihrer linienförmigen Anlage an den Stützflächen auch die Möglichkeit des Kippens der Hohlwelle gegenüber dem Kupplungsstück in einem gewissen Umfang. Hierdurch kann vor allen Dingen der Nachteil ausgeglichen werden, daß die Achse der Hohlwelle nicht genau in der Achse des Kupplungsstückes verläuft.

Es versteht sich von selbst, daß die Ballen auch den Stützflächen des Einsatzes angeformt sein können. Auch dieser Gedanke soll von der vorliegenden Erfindung umfaßt sein.

Bevorzugt sind den Zinnen zur Spitze hin Schrägflächen angeformt, welche wiederum mit Schrägflächen der Einsätze zusammenwirken. Dabei sind die Schrägflächen der Einsätze so ausgebildet, daß Schrägflächen von zwei benachbarten Einsätzen in einer Ebene verlaufen, welche in einem Winkel zur Achse des Kupplungsstückes angeordnet ist. Da hierdurch diese Schrägflächen auf der Spitze des Einsatzes eine dreiecksförmige Dachfläche ausbilden, rutschen beim Auftreffen der Zinnen bzw. deren Schrägflächen auf die Schrägflächen der Einsätze die Zinnen in die Aufnahme ab, wodurch Kupplungsstück und Hohlwelle äußerst genau zentriert werden.

Aus fertigungstechnischen Gründen hat es sich als ratsam erwiesen, wenn die Zinnen nicht direkt der Hohlwelle eingeformt sind, sondern Teil eines separaten Verbindungsstückes darstellen, welches mit einer entsprechenden Anschlußhülse in der Hohlwelle sitzt.

In einem weiteren Teil der Erfindung wird die Drehbewegung der Hohlwelle über ein Kegelrad auf ein Kegelrad einer nachfolgenden Hohlwelle übertragen. Das Kegelrad verspannt auf der Hohlwelle zumindest ein Kugellager, wobei ein Befestigungsring mittels Schrauben auf einer Stirnfläche der Hohlwelle festgelegt ist und mit einer Schulter auf einen Absatz des Kegelrades drückt.

Damit das Kegelrad die Lager verspannen kann, steht es geringfügig über die Stirnfläche der Hohlwelle hervor. Beim Aufschrauben des Befestigungsringes drückt dessen Schulter auf den Absatz des Kegelrades, wobei der Druck vom Kegelrad auf die Kugellager bzw. entsprechende Lagerhülsen und Stützringe weitergegeben wird. Hierbei hat sich in der Praxis herausgestellt, daß sich der Befestigungsring beim Festlegen mittels der Schrauben im Verhältnis zur Stirnfläche bzw. zum Absatz des Kegelrades neigt, was dazu führte, daß beim Anziehen der Schrauben die Köpfe abbrachen. Dies kann erfingungsgemäß dadurch beseitigt werden, daß der Schraubenkopf in eine Senke in dem Befestigungsring eingreift, deren Senkengrund abgeschrägt bzw. abgerundet ausgebildet ist. Bevorzugt soll auch die untere Druckfläche des Schraubenkopfes, welche in der Senke liegt ebenfalls entsprechend abgeschrägt bzw. abgerundet ausgebildet sein. Es hat sich herausgestellt, daß damit ein Abbrechen des Schraubenkopfes vermieden wird.

Insgesamt wird durch die vorliegende Erfindung eine Verbindung zwischen einem Kupplungsstück und einer Hohlwelle erreicht, welche blind, d.h. ohne Blickkontakt innerhalb eines Armes hergestellt werden kann, wobei sich die Zinnen ihre entsprechenden Aufnahmen quasi selbst suchen. Die schlußendlich erreichte Verbindung ist paßgenau und immer wiederholbar.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1 eine Draufsicht auf einen erfindungsgemäßen Manipulator;
Fig. 2 einen Längsschnitt durch einen Teil des Manipulators gem. Fig. 1 im Bereich eines Gelenkes;
Fig. 3 eine Draufsicht auf eine erfindungsgemäße Verbindung;
Fig. 4 einen Querschnitt durch die Verbindung gemäß Fig. 3 entlang Linie IV - IV;
Fig. 5 eine Draufsicht auf ein Verbindungsstück;
Fig. 6 einen Querschnitt durch das Verbindungsstück gemäß Fig. 5 entlang Linie VI - VI;
Fig. 7 eine Draufsicht auf Kupplungsstück;
Fig. 8 einen Querschnitt durch das Kupplungsstück gemäß Figur 7 entlang Linie VIII - VIII;
Fig. 9 einen Ausschnitt aus Figur 2 im Bereich eines Kupplungsstückes mit Kegelrad;
Fig. 10 einen vergrößerten Ausschnitt aus Figur 9 im Bereich der Festlegung eines Kegelrades an einem Kupplungsstück;
Fig. 11 eine Draufsicht auf einen Befestigungsring;
Fig. 12 eine Querschnitt durch den Befestigungsring gemäß Figur 11;
Fig. 13 eine Draufsicht auf eine erfindungsgemäße Schraube zum Festlegen des Befestigungsringes gemäß den Figuren 11 und 12.

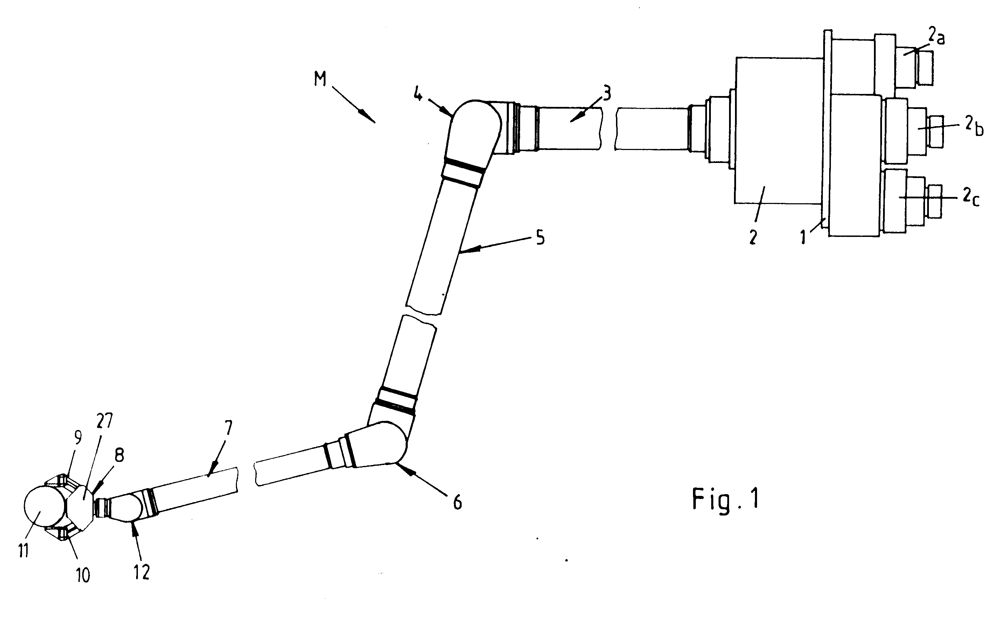

Ein Manipulator M weist gem. Fig. 1 eine Montageplatte 1 auf, an welcher auf der einen Seite eine Mehrzahl von Einzelmotoren 2a, 2b, 2c festliegt, deren Antriebswelle allerdings die Montageplatte 1 durchgreift und mit einem Getriebe in einem Getriebekasten 2 zusammenwirkt. Dieses Getriebe besteht aus einer Reihe von Antriebswellen und Zahnrädern, über welche jeweils die entsprechende Motordrehung auf später beschriebene Hohlwellen 13 übertragen werden.

Ein erster Satz von Hohlwellen befindet sich in einem Oberarm 3, an dem über ein Gelenk 4 ein Mittelarm 5 anschließt. Mittelarm 5 geht über ein weiteres Gelenk 6 in einen Unterarm 7 über, an den schlußendlich ein Greifer 8 anschließt. Der Greifer 8 hält mit Zangenschenkeln 9 und 10 einen Gegenstand 11. Beim Übergang von Oberarm 3 zum Mittelarm 5 und von Mittelarm 5 zu Unterarm 7 ist erkennbar, daß sich der Durchmesser des jeweiligen Armes vermindert, da in jedem Fall ein Hohlwellensatz entfällt, über den der jeweils nachfolgende Arm angetrieben wird.

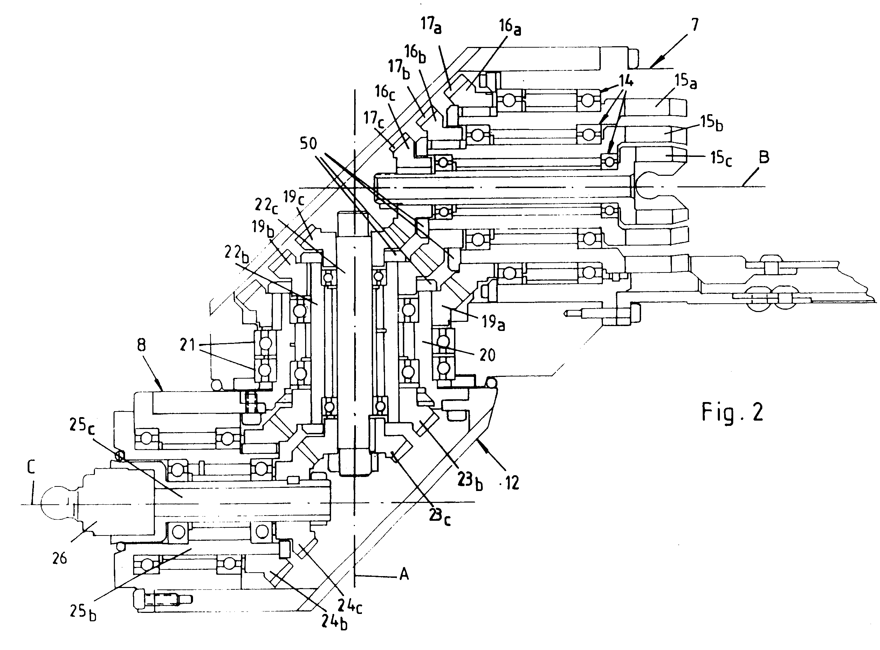

In Fig. 2 ist ein Querschnitt aus einem Bereich eines Gelenkes 12 zwischen Unterarm 7 und Greifer 8 dargestellt. Hierbei ist erkennbar, daß vom Unterarm 7 her lediglich noch drei Hohlwellen, an welche Kupplungsstücke 15a, 15b und 15c anschließen, die sich über Kugellager 14 gegeneinander abgestützen, andererseits ist jedem Kupplungsstück 15 ein Kegelrad 16a, 16b und 16c mit einer Schrägverzahnung 17a, 17b und 17 c aufgesetzt.

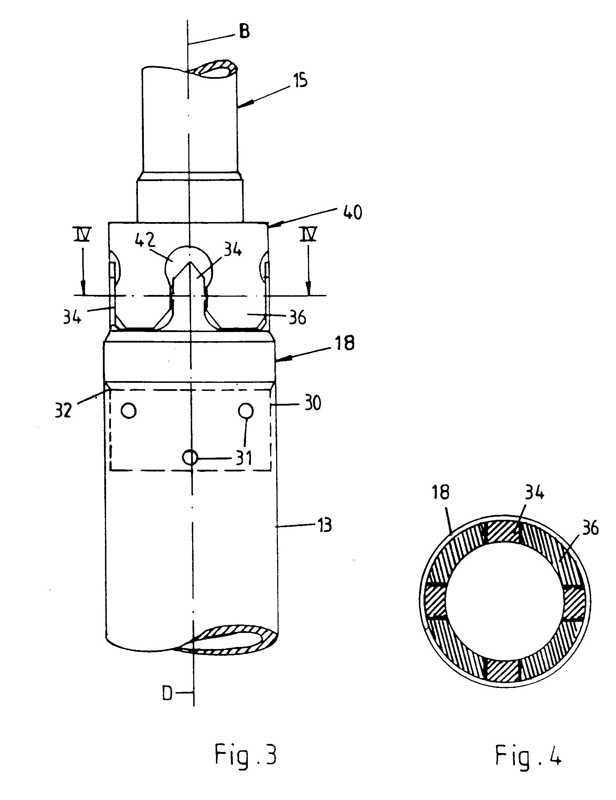

An das Kupplungsstück 15 schließt zur Hohlwelle 13 hin ein Verbindungsstück 18 an, wie dies in den Figuren 3, 5 und 6 näher gezeigt ist. Das Verbindungsstück ist dabei fest mit einem Rohr- abschnitt verbunden, welches den jeweiligen Arm 3, 5 bzw. 7 auf dessen gesamter Länge bis zum nächsten Gelenk 4, 6 bzw. 12 durchzieht.

Das äußerste Kegelrad 16a überträgt seine Drehbewegung auf ein Kegelrad 19a, welches einem Armstumpf 20 des Gelenkes 12 aufgesetzt ist. Die Achse A des Armstumpfes 20 bzw. Gelenkes 12 verläuft senkrecht zu einer Achse B des Unterarms 7 bzw. der Hohlwellen 13 sowie auch senkrecht zu einer Achse C des anschließenden Greifers 8. Der Armstumpf 20 dreht im übrigen in zwei Kugellagern 21, so daß der Greifer 8 um die Achse A gedreht wird.

Innerhalb des Armstumpfes 20 befinden sich ineinandergesetzt zwei weitere Hohlwellen 22b und 22c, deren Kegelräder 19b und 19c die Drehbewegung der Kegelräder 16b und 16c abnehmen. Ober die Hohlwellen 22b und 22c wird diese Drehbewegung auf zwei weitere Kegelräder 23b und 23c übertragen, wobei deren Drehbewegungen wiederum von zwei Kegelrädern 24b und 24c auf entsprechenden Kohlwellen 25b und 25c übertragen werden. In der Hohlwelle 25c sitzt dann eine Kupplung 26 für eine entsprechende Greifhand 27.

Zur lösbaren Verbindung zwischen einer Hohlwelle 13 und einem Kupplungsstück 15 ist gern. Fig. 3 das Verbindungsstück 18 vorgesehen. Dieses steckt mit einer Anschlußhülse 30 in der Kohlwelle 13 und ist dort durch nicht näher gezeigte Verbindungselemente gesichert, welche mit Löchern 31 in der Anschlußhülse 30 zusammenwirken. Die Einsetztiefe des Verbindungsstückes 18 in die Kohlwelle 13 wird im übrigen durch eine Anschlagschulter 32 begrenzt.

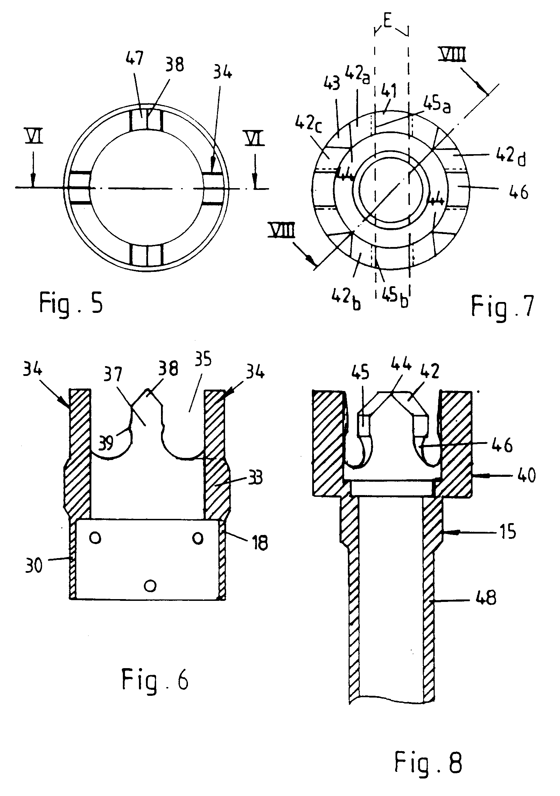

Auf die Anschlußhülse 30 folgt ein in Fig. 6 besser erkennbarer Ring 33, von welchem Zinnen 34 aufragen. Zwischen jeweils zwei Zinnen 34 befindet sich ein Tal 35, in das zur Verbindung ein Einsatz 36 von dem Kupplungsstück 15 eingreift.

Im vorliegenden Ausführungsbeispiel besitzt jede Zinne 34 eine pfeilspitzartige Form aus einem etwa rechteckförmigen Schaftteil 37 und aufgesetzter Spitze 38. Wesentlich ist, daß seitlich an das Schaftteil 37 jeweils zu einem Tal 35 hin eine Materialansammlung als Ballen 39 angeformt ist. Durch diese beidseitigen Ballen 39 stützt sich jede Zinne 34 gegen zwei benachbarte Einsätze 36 des Kupplungsstückes 15 ab, wobei die Paßgenauigkeit hierdurch wesentlich erhöht ist. Ein möglicher Versatz von Kupplungsstück 15 zum Verbindungsstück 18 wird damit vermieden, jedoch bleibt die Möglichkeit einer Winkelbewegung in einem gewissen Rahmen erhalten, so daß die Achse B des Kupplungsstückes 15 nicht unbedingt direkt mit der Achse D der Kohlwelle zusammenfallen muß. In der Regel ist dies zwar, wie in Fig. 3 gezeigt, der Fall, jedoch ermöglicht die Balligkeit der Zinnen 34 auch einen geringfügigen Winkelversatz der beiden Achsen B und D zueinander.

Die Einsätze 36 sind Teil eines Ringkörpers 40, wobei jeweils zwei Einsätze 36 zwischen sich eine Aufnahme 41 freilassen, in welche die Zinnen 34 eingreifen. Von hervorzuhebender Bedeutung ist auch die Form der Einsätze 36 und der Aufnahme 41. Hierzu ist in den Figuren 7 und 8 erkennbar, daß jeder Einsatz 36 eine Schrägfläche 42 zu jeder Aufnahme 41 hin aufweist, wobei die sich jeweils sekantial gegentiberliegenden Schrägflächen 42a und 42b oder auch 42c und 42d in einer Ebene angeordnet sind. Diese Aussage gilt auch für die anderen Schrägflächen 42 und auch dann, wenn anstatt von nur vier Einsätzen 36 beispielsweise sechs Einsätze vorgesehen sind.

Die Schrägflächen 42a und 42c eines Einsatzes 36 treffen sich in einer dreieckförmigen Dachfläche 43, wobei jede dreieckförmige Dachfläche 43 mit einer Spitze 44 radial auf eine gegenüberliegende Spitze 44 des gegenüberliegenden Einsatzes zeigt.

In der Aufnahme 41 schließt an die Schrägfläche 42 eine Stützfläche 45 an, gegen welche sich die Zinne 34 mit dem Ballen 39 abstützt. Die Stützflächen 45a und 45b von benachbarten Einsätzen 36 sind in einer gemeinsamen achsparallelen Ebene E angeordnet, die gestrichelt dargestellt ist.

An diese Stützfläche 45 schließt ein ausgerundeter Aufnahmegrund 46 an und verbindet zwei benachbarte Stützflächen miteinander.

Diese Ausgestaltung der Einsätze 36 und Aufnahmen 41 bewirkt, daß die Zinnen 34, wo immer sie auch mit ihren Spitzen 38 auf die Einsätze 36 auftreffen, an den Schrägflächen 42 abgleiten und in die Aufnahmen 41 hineingeführt werden, so daß in jedem Fall eine absolut sichere und korrekte Zentrierung von Kupplungsstück und Verbindungsstück erfolgt. Es findet keinerlei Versatz der Achsen B und D statt, ledglich erlaubt die Balligkeit ein Abknicken einer Achse gegenüber der anderen in einem beschränkten Umfang. Dieses Führen des Verbindungsstückes ist vor allem dann von besonderem Vorteil, wenn ein derartiger Manipulator M repariert wird, d.h. wenn Hohlwellen in einen vorhandenen Arm eingesetzt werden, die ihr entsprechendes Kupplungsstück ohne optische Hilfe suchen müssen. Sobald das Verbindungsstück 18 auf das Kupplungsstück 15 auftrifft, wird das Kupplungsstück 15 in die richtige Lage gedreht, wobei die Zinnen 34, die durch die Ausbildung der Spitze 38 selbst Schrägflächen 47 aufweisen, an den Schrägflächen 42 entlanggleiten, bis sie in der Aufnahme 41 stecken.

An den Ringkörper 40 schließt im übrigen ein Hohlschaft 48 an, auf den dann andernends des Ringkörpers 40 das entsprechende Kegelrad 23 aufgesetzt wird.

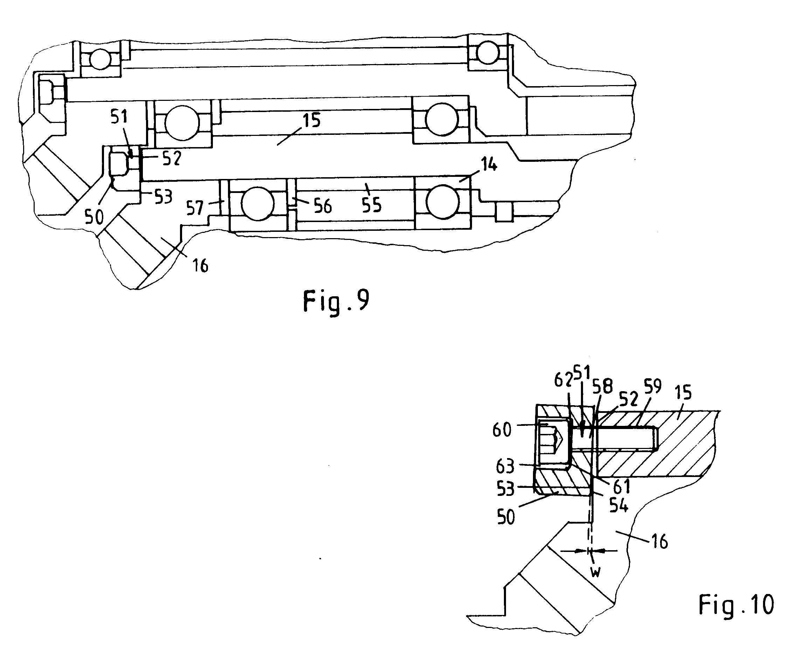

Ein weiteres wesentliches Problem hat sich bei der Festlegung der Kegelräder 16 herausgestellt. Die Kegelräder 16 werden über jeweils einen Befestigungsring 50 an Kupplungsstücken 15 jenseits des Ringkörpers 40 festgelegt. Hierzu werden sie mittels einer versenkten Schraube 51 an einer Stirnfläche 52 des Kupplungsstückes 15 festgelegt, wobei sie jedoch das Kupplungsstück 15 überragen und mit einer Schulter 53 auf einen Absatz 54 des dem Kupplungsstück 15 aufgeschobenen Kegelrades 16 drücken (siehe Figur 9). Da mittels dem Kegelrad 16 auch die Lager 14 zwischen einer entsprechenden Lagerhülse 55 und Stützringen 56 und 57 verspannt werden, sollte der Absatz 54 etwas über die Ebene der Stirnfläche 52 hervorstehen, so daß die Schulter 53 das Kegelrad 16 in den Stützring 57 zum Verspannen der Lager 14 drückt. Hierbei geschieht allerdings eine Verformung des Befestigungsringes 50, wie dies in Figur 10 übertrieben angedeutet ist. Der Befestigungsring stellt sich im Verhältnis zur Stirnfläche 52 und zum Absatz 54 quer, wobei ein Abstandswinkel w erzeugt wird.

Wird nun die Schraube 51 mit ihrem Gewindeschaft 58 in eine Gewindebohrung 59 in das Kupplungsstück 15 eingeschraubt, so trifft auch der Schraubenkopf 60 bzw. seine untere Druckfläche 61 auf einen Senkengrund 62 einer Kopfsenke 63. Wird die Schraube 51 weiter angezogen so daß es zu der Schrägneigung des Befestigungsringes 50 kommt, so hebt der Senkengrund 62 ebenfalls von der unteren Druckfläche 61 in gleichem Abstandswinkel w ab, so daß die untere Druckfläche 61 nur noch punktförmig auf dem Senkengrund 62 aufsitzt. Die Folge davon ist, daß der Schraubenkopf 60 vom Gewindeschaft 58 abspringt. Eine Halterung des Kegelrades 16 ist nicht mehr möglich.

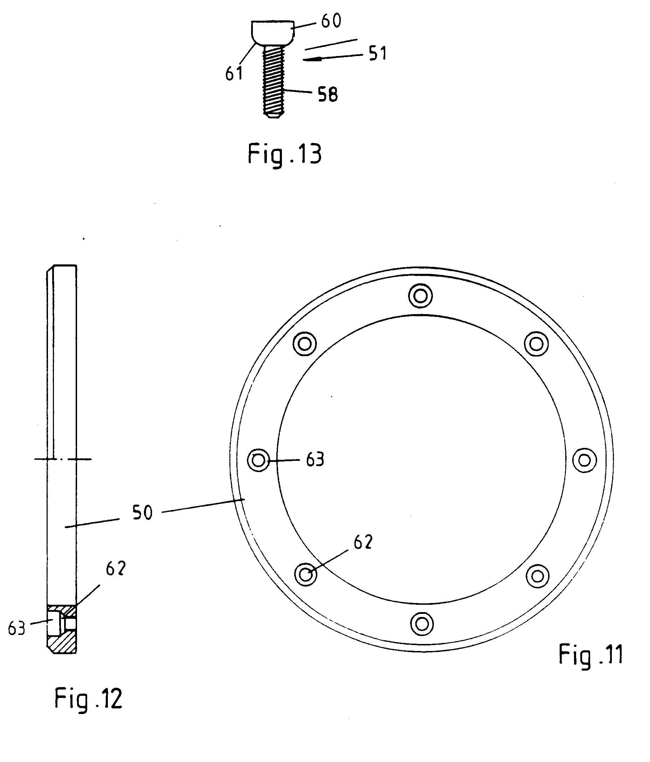

Dieser Nachteil kann jedoch dadurch verhindert werden, daß der Senkengrund 62, wie in Figur 11 und 12 gezeigt, abgeschrägt bzw. abgerundet ausgebildet ist. Gleichfalls ist auch die untere Druckfläche 61 der Schraube 51, wie in Figur 13 gezeigt, abgerundet ausgebildet. Hierdurch bleibt eine flächige Anlage zwischen der unteren Druckfläche 61 und dem Senkengrund 62 über weite Teile auch bei einer Neigung des Befestigungsringes 50 erhalten und es hat sich in der Praxis herausgestellt, daß es nicht mehr zu einem Abspringen des Schraubenkopfes 60 kommt. Dies ist ein ganz erheblicher Vorteil der vorliegenden Erfindung. Es entsteht quasi eine Kugelpfanne durch den Senkengrund 62 für eine kugelige untere Druckfläche 61.

## Patentansprüche

1. Vorrichtung zum Manipulieren von Gegenständen (11) mit einem Greifer (8), welcher über zumindest einen Arm (3, 5, 7) mit einem Getriebe (2) und Antriebsmotor (2a, 2b, 2c) verbunden ist, wobei zur Übertragung der Drehbewegung auf eine nachfolgende Welle in dem Arm (3, 5, 7) zumindest eine Hohlwelle (13) mit Zinnen (34) in Aufnahmen (41) in einem mit der Hohlwelle (13) fluchtendem Kupplungsstück (15) und das Kupplungsstück (15) mit Einsätzen (36) in Tälern (35) zwischen den Zinnen (34) eingreift, wobei dem Kupplungsstück (15) anderenends eine Schrägverzahnung (17) aufgesetzt ist,
dadurch gekennzeichnet,
daß jede Zinne (34) ein Schaftteil (37) aufweist, wobei die zu den Tälern (35) hin weisenden Seitenflächen von sich gegenüberliegenden Zinnen (34) in jeweils einer gemeinsamen achsparallelen Ebene angeordnet sind, und daß jeder Einsatz (36) zur Aufnahme (41) hin Stützflächen (45) aufweist, wobei die Stützflächen (45) von sich gegenüberliegenden Einsätzen (36) ebenfalls in einer achsparallelen Ebene (E) liegen.

2. Vorrichtung nach Anspruch 1, dadurch gekennzeichnet, daß an das Schaftteil (37) unter Ausbildung von zwei Schrägflächen (47) eine Spitze (38) anschließt und daß an die Stützfläche (45) nach oben jeweils eine Schrägfläche (42) anschließt.

3. Vorrichtung nach Anspruch 2, dadurch gekennzeichnet, daß die Schrägflächen (42) von zwei benachbarten Einsätzen (36) in einer Ebene liegen, welche in einem Winkel zur Achse (B) des Kupplungsstückes (15) verläuft.

4. Vorrichtung nach Anspruch 3, dadurch gekennzeichnet, daß die Schrägflächen (42) eines Einsatzes (36) eine dreiecksförmige Dachfläche (43) ausbilden, wobei die Spitze (44) von sich gegenüberliegenden Einsätzen radial gegenüberliegend angeordnet sind.

5. Vorrichtung nach wenigstens einem der Ansprüche 1 bis 4, dadurch gekennzeichnet, daß die Seitenflächen mit Ballen (39) belegt sind.

6. Vorrichtung nach wenigstens einem der Ansprüche 1 bis 5, dadurch gekennzeichnet, daß an die Stützflächen (45) ein aufgerundeter Aufnahmegrund (46) anschließt.

7. Vorrichtung nach wenigstens einem der Ansprüche 1 - 6, dadurch gekennzeichnet, daß die Zinnen (34) aus einem Verbindungsstück (18) herausgeformt sind, welches mit einer Anschlußhülse (30) in der Hohlwelle (13) sitzt.

8. Vorrichtung nach wenigstens einem der Ansprüche 1 - 7, dadurch gekennzeichnet, daß die Drehbewegung der Hohlwelle (13) über ein Kegelrad (16) auf ein Kegelrad (19) einer nachfolgenden Hohlwelle (22) übertragbar ist, welches auf der Hohlwelle (13, 22) zumindest ein Kugellager (14, 21) verspannt, wobei ein Befestigungsring (50) mittels Schrauben (51) auf einer Stirnfläche (52) der Hohlwelle (13, 22) festgelegt ist und mit einer Schulter (53) auf einen Absatz (54) des Kegelrades (16, 19) drückt und ein Schraubenkopf (60) der Schraube (51) in einer Kopfsenke (63) des Befestigungsringes (50) versenkt ist und einem Senkengrund (62) mit einer unteren Druckfläche (61) anliegt, wobei Senkengrund (62) und/oder untere Druckfläche (61) abgeschrägt, bevorzugt kugelig gerundet ausgebildet sind.

## Claims

1. Device for the manipulation of articles (11), having a gripper (8) which is connected via at least one arm (3, 5, 7) to a gear (2) and drive motor (2a, 2b, 2c), at least one hollow shaft (13) with crenellations (34) engaging in receiving means (41) in a coupling piece (15), which is in alignment with the hollow shaft (13), and the coupling piece (15), provided with inserts (36), engaging in valleys (35) between the crenellations (34) for transmitting the rotary movement to a subsequent shaft in the arm (3, 5, 7), an inclined toothing (17) being mounted on the other end of the coupling piece (15), characterised in that each crenellation (34) comprises a shank portion (37), the lateral faces of oppositely situated crenellations (34) pointing towards the valleys (35) and being respectively disposed in a common, axis-parallel plane, and in that each insert (36) comprises supporting faces (45) extending towards the receiving means (41), the supporting faces (45) of oppositely situated inserts (36) also lying in an axis-parallel plane (E).

2. Device according to claim 1, characterised in that a peak (38) communicates with the shank portion (37) so as to form two inclined faces (47), and in that an inclined face (42) respectively communicates upwardly with the supporting face (45).

3. Device according to claim 2, characterised in that the inclined faces (42) of two adjacent inserts (36) lie in a plane which extends at an angle to the axis (B) of the coupling piece (15).

4. Device according to claim 3, characterised in that the inclined faces (42) of one insert (36) form a triangular cover face (43), the peaks (44) of oppositely situated inserts being disposed radially opposite one another.

5. Device according to at least one of claims 1 to 4, characterised in that the lateral faces are covered with balls (39).

6. Device according to at least one of claims 1 to 5, characterised in that a rounded receiving base (46) communicates with the supporting faces (45).

7. Device according to at least one of claims 1 to 6, characterised in that the crenellations (34) are formed from a connection piece (18) which sits in the hollow shaft (13) with a connection sleeve (30).

8. Device according to at least one of claims 1 to 7, characterised in that the rotary movement of the hollow shaft (13) is transmittable via a conical wheel (16) to a conical wheel (19) of a subsequent hollow shaft (22), which conical wheel (19) tensions at least one ball bearing (14, 21) on the hollow shaft (13, 22), a securing ring (50) being secured by means of screws (51) on one end face (52) of the hollow shaft (13, 22) and pressing with a shoulder (53) on one portion (54) of the conical wheel (16, 19), and one screw head (60) of the screw (51) being sunk in a head depression (63) of the securing ring (50) and abutting against a depression base (62) with a lower pressure face (61), depression base (62) and/or lower pressure face (61) having an inclined, preferably conically rounded configuration.

## Revendications

1. Dispositif pour manipuler des objets (11) comprenant une pince (8) reliée par au moins un bras (3, 5, 7) à une transmission (2) et à des moteurs (2a, 2b, 2c), la transmission du mouvement de rotation à un axe suivant dans le bras (3, 5, 7) étant assurée par au moins un axe creux (13) avec des dents (34) venant dans des logements (41) d'une pièce d'accouplement (15) alignée sur l'axe creux (13) et cette pièce d'accouplement (15) vient prendre avec des prolongements (36) dans les creux (35) entre les dents (34), l'autre extrémité de la pièce d'accouplement (15) portant une denture en biais (17),
caractérisé en ce que
chaque dent (34) comporte un corps (37) et les surfaces latérales tournées vers les fonds (35) de dents (34) opposées, étant situées chaque fois dans un plan commun parallèle à l'axe et chaque prolongement (36) comporte des surfaces d'appui (45) pour le logement (41), les surfaces d'appui (45) de prolongement (36) en regard étant également situées dans un plan parallèle à l'axe E.

2. Dispositif selon la revendication 1,
caractérisé en ce qu'
une pointe (38) se raccorde à la tige (37) en formant deux surfaces inclinées (47) et la surface d'appui (45) se raccorde chaque fois vers le haut par une surface inclinée (42).

3. Dispositif selon la revendication 2,
caractérisé en ce que
les surfaces inclinées (42) de deux prolongements voisins (36) se trouvent dans un plan faisant un angle par rapport à l'axe géométrique (B) de la pièce d'accouplement (15).

4. Dispositif selon la revendication 3,
caractérisé en ce que
les surfaces inclinées (42) de chaque prolongement (36) forment une surface de toit (43) triangulaire et la pointe (44) de prolongement en regard sont radialement opposées.

5. Dispositif selon au moins l'une des revendications 1 à 4,
caractérisé en ce que
les surfaces latérales sont occupées par des bossages (39).

6. Dispositif selon au moins l'une des revendications 1 à 5,
caractérisé en ce qu'
un fond de logement (46), arrondi fait suite aux surfaces d'appui (45).

7. Dispositif selon au moins l'une des revendications 1 à 6,
caractérisé en ce que
les dents (34) sont formées dans une pièce de liaison (18) montée avec un manchon de liaison (30) dans l'axe creux (13).

8. Dispositif selon au moins l'une des revendications 1 à 7,
caractérisé en ce que
le mouvement de rotation de l'axe creux (13) est transmis par une roue conique (16) à une roue conique (19) d'un axe creux (22) en aval, et celui-ci est fixé sur l'axe creux (13, 22) par au moins un palier à billes (14, 21), une bague de fixation (50) étant fixée à l'aide de vis (51) sur une face frontale (52) de l'axe creux (13, 22) et appuie par un épaulement (53) contre un épaulement (54) de la roue conique (16, 19) et une tête de vis (60) d'une vis (51) est noyée dans un lamage (63) de la bague de fixation (50) et s'appuie contre le fond (62) du lamage par sa surface de pression (61) inférieure, le fond (62) et/ou la surface de pression inférieure (61) étant en biais de préférence arrondi de façon sphérique.
